# EUROPÄISCHE PATENTSCHRIFT

(11) **EP 3 150 072 B1**
(45) Veröffentlichungstag und Bekanntmachung des Hinweises auf die Patenterteilung: **15.05.2019**
(21) Anmeldenummer: 15187282.7
(22) Anmeldetag: 29.09.2015
(51) Int. Cl.: A22C 11/02

(54) **FÜLLMASCHINE UND VERFAHREN ZUR FÜLLSTANDSMESSUNG MIT RADARSENSOR, INSBESONDERE BEI DER WURSTHERSTELLUNG**
FILLING MACHINE AND METHOD FOR MEASURING A FILL LEVEL WITH RADAR SENSOR, IN PARTICULAR IN SAUSAGE MAKING
MACHINE DE REMPLISSAGE ET PROCÉDÉ DE MESURE DE NIVEAU DE REMPLISSAGE À L'AIDE D'UN CAPTEUR RADAR EN PARTICULIER POUR LA FABRICATION DE SAUCISSES

(43) Veröffentlichungstag der Anmeldung: 05.04.2017
(73) Patentinhaber: Albert Handtmann Maschinenfabrik GmbH & Co. KG, 88400 Biberach (DE)
(72) Erfinder: Staudenrausch, Martin, 88400 Biberach (DE)
(74) Vertreter: Grünecker Patent- und Rechtsanwälte PartG mbB

(56) Entgegenhaltungen:
- EP-A1- 1 431 724
- EP-A1- 1 836 896
- EP-A1- 2 128 576
- CN-A- 1 264 033
- US-A1- 2004 119 635

## Beschreibung

Die Erfindung betrifft eine Füllmaschine zum Abfüllen von Füllmedium sowie ein Verfahren zum Bestimmen des Füllstands, insbesondere zur Wurstherstellung, gemäß den Oberbegriffen der Ansprüche 1 und 9.

Füllmaschinen zum Abfüllen von pastösem Füllmedium sind insbesondere zum Herstellen von Würsten aus dem Stand der Technik bereits bekannt. Bei solchen Füllmaschinen wird pastöses Füllmedium aus einem Trichter in ein Förderwerk eingebracht und von dort aus in ein Füllorgan, insbesondere Füllrohr, ausgestoßen, um z.B. Wursthüllen oder Behälter mit pastöser Masse zu befüllen.

Für die kontinuierliche Füllstandserfassung in Vakuumfüll- und Hochvakuumfüllmaschinen werden derzeit meist Ultraschall- oder Laserlaufzeitsensoren eingesetzt (vgl. EP 1 836 896 A1). Die Füllstandserfassung wird für die kontinuierliche oder intermittierende Versorgung der Füllmaschine mit Füllmasse benötigt. Die derzeitigen Messverfahren bringen jedoch wesentliche Probleme mit sich.

Da beispielsweise ein Laserlaufzeitsensor mit einem optischen Messprinzip funktioniert, kommt es zu Messfehlern bei Kondensat- und Tröpfchenbildung am Sensor, z.B. wenn sich im Fülltrichter heiße Massen befinden.

Bei durchsichtigen bzw. klaren Füllmassen (z.B. klaren Suppenbrühen) kann der Füllstand nicht oder nur sehr ungenau gemessen werden, da der Laserstrahl die Füllmedien durchdringt und erst an der Trichterwandung reflektiert wird.

Bei den Hochvakuumfüllmaschinen wird der Trichter oberhalb der Füllmasse evakuiert. Dies führt auch bei niedrigen Temperaturen der abzufüllenden Massen zu Wasserdampf- und Nebelbildung, was wiederum zu Messfehlern führt.

Auch die Schaumbildung an der Oberfläche der Füllmasse führt zu falschen Messergebnissen.

Ein Ultraschallsensor benötigt funktionsbedingt ein Trägermedium, um die Laufzeit der Schallwellen messen zu können. Im Falle der Vakuumfüllmaschine mit offenem Trichter ist dies die sich über der Füllmaschine befindliche Luft. Ab bestimmten Unterdrücken funktionieren diese Sensoren wegen dem fehlenden Trägermedium nicht mehr und sind somit für Hochvakuumfüllmaschinen nicht geeignet.

Der vorliegenden Erfindung liegt daher die Aufgabe zugrunde, eine Füllmaschine und ein Verfahren bereitzustellen, die ermöglichen, den Füllstand in dem Trichter der Füllmaschine auf einfache und zuverlässige Art und Weise zu erfassen, insbesondere auch bei Hochvakuumfüllmaschinen.

Diese Aufgabe wird durch die Merkmale der Ansprüche 1 und 9 gelöst.

Gemäß der vorliegenden Erfindung umfasst eine Füllmaschine zum Abfüllen von pastösem Füllmedium, insbesondere zum Herstellen von Würsten, einen Trichter zur Aufnahme des Füllmediums, ein Förderwerk zum Fördern des Füllmediums zu einem Füllorgan, insbesondere einem Füllrohr. Die Füllmaschine ist insbesondere geeignet um Würste herzustellen, wobei Würsthüllen mit pastöser Masse z.B. Wurstbrät über ein Füllrohr befüllt werden. Die Füllmaschine ist aber auch für andere flüssige oder pastöse Nahrungsmittel geeignet, die in Behälter abgefüllt werden können, z.B. heisse Massen wie Käse, Suppe etc.

Die Füllmaschine umfasst weiter eine Einrichtung zur Messung des Füllstands im Trichter. Gemäß der Erfindung umfasst die Einrichtung zur Füllstandsmessung einen Radarsensor.

Mit Hilfe des Radarsensors kann der Füllstand im Trichter kontinuierlich und berührungslos auf einfache und zuverlässige Art und Weise bestimmt werden. Die Verwendung eines Radarsensors ist sowohl für offene Fülltrichter als auch für geschlossene Trichter gleichermaßen geeignet.

Der Radarsensor sendet elektromagnetische Wellen aus. Diese werden an der Oberfläche des im Trichter befindlichen Füllmediums reflektiert und vom Radarsensor wieder empfangen. Dazu ist im Radarsensor ein entsprechendes Antennensystem vorgesehen, das entsprechende elektromagnetische Wellen abstrahlt und wieder empfangen kann. Dabei wird die Laufzeit der elektromagnetischen Wellen und damit der Abstand zum Füllmedium gemessen.

Diese Messmethode ist unempfindlich gegenüber Wassertropfen, Kondensatbildung, Nebelbildung sowie Verschmutzung des Sensors und kann auch die Oberfläche von glasklaren Füllmedien erfassen. Dieses Verfahren funktioniert insbesondere auch sehr gut bei Unterdruck im Trichter.

Der Trichter verjüngt sich zumindest abschnittsweise konisch nach unten, d.h. zum Auslauf bzw. zum Förderwerk hin. Es ist besonders vorteilhaft wenn der Radarsensor in einem Bereich oberhalb der Oberkante des Trichters angeordnet ist. Somit ist möglich, dass der Radarsensor derart angeordnet wird, dass er den Füllstand über die ganze Höhe des Trichters erfassen kann. Der Sensor selbst bleibt dabei in einer geschützten Position.

Der Trichter umfasst einen Deckel, was insbesondere bei Hochvakuumfüllmaschinen der Fall ist, wobei der Radarsensor in einem Bereich innerhalb des Deckels angeordnet ist. Somit ist der Sensor fest in die Füllmaschine integriert und in einer geschützten Position, insbesondere auch deshalb, weil vorteilhafterweise die Deckel einen Deckelboden aufweisen, der den Deckelinnenraum vom Trichterinnenraum abdichtet. Der Deckelinnenraum wird deswegen abgedichtet, da er prinzipbedingt unhygienisch ist und mindestens einen Antrieb, z.B. für eine Fördereinrichtung oder ein Zulaufventil aufweist. Da der Deckelboden z.B. aus Metall gebildet ist, ist der Radarsensor vorzugsweise an einer Öffnung am Deckelboden angeordnet. Alternativ dazu könnte der Deckelboden auch aus einem für die erzeugten elektromagnetischen Wellen durchlässigen Material, wie z.B. Kunststoff, insbesondere POM, PC, PE, etc. gefertigt sein

Da der Deckel geöffnet werden kann, ist der Sensor leicht für Wartungsarbeiten zugänglich und kann auch einfach in bestehende Systeme nachgerüstet werden.

Der Radarsensor ist vorteilhafterweise derart angeordnet, dass seine Längsachse A entweder senkrecht zu einer Horizontalebene angeordnet ist oder insbesondere um < 90° -30°, vorzugsweise um <90° - 40° zu einer Horizontalebene schräg geneigt ist, wobei die Oberfläche des Füllmediums in dieser Horizontalebene liegt, oder parallel zu dieser Ebene verläuft. Eine Schrägstellung des Radarsensors und somit der Antennenachse ermöglicht, dass die elektromagnetischen Wellen, auch bei exzentrischer Anordnung des Radarsensors und konisch zulaufendem Trichter mit hoher Leistungsdichte bis in den unteren Bereich des Trichters reichen und ungewünschte Reflexionen an der Behälterwand minimiert werden können. Es ist vorteilhaft, wenn der Radarsensor exzentrisch angeordnet ist, da sich entlang der Mittelachse oftmals Fördereinrichtungen, wie beispielsweise Förderschnecken etc. bzw. Befestigungsmittel für Fördereinrichtungen befinden. Eine solche Schrägstellung des Sensors ist insbesondere bei offenen Trichtern (d.h. bei Trichtern mit offener Trichteroberseite) vorteilhaft, da der Sensor hier relativ weit außen in Bezug auf die Mittelachse des Trichters angeordnet werden muss, da der Brätwagen beim Auskippen des Füllmediums bis in den mittleren Bereich des Trichters ragt und so die Messung stören würde.

Es ist vorteilhaft, wenn die vom Radarsensor ausgesandten elektromagnetischen Wellen im unteren Bereich des Fülltrichters auf die Trichterwandung und/oder den Trichterboden und/oder eine Trichterbodenöffnung trifft, so dass auch niedrige Füllstände erfasst werden können.

Vorteilhafterweise ist der Radarsensor mit einer Auswerteeinheit verbunden, die derart ausgebildet ist, dass über die Laufzeit der von dem Radarsensor gesendeten und von der Oberfläche des Füllmediums zum Radarsensor reflektierten elektromagnetischen Wellen der Füllstand im Trichter ermittelt werden kann. Die Laufzeit ist dabei proportional zum Füllstand, wobei der Füllstand durch einfache geometrische Berechnung, bei bekannter Trichtergeometrie berechnet werden kann.

Es ist ganz besonders vorteilhaft, wenn die Auswerteeinheit Reflexionssignale von der Trichterwand und/oder von Bauteilen im Trichter, insbesondere beweglichen Teilen, wie z.B. Zubringerkurve und/oder Schnecke ausblenden kann. Das bedeutet, dass durch eine entsprechende Signalverarbeitung die Reflexionen im und am Behälter analysiert werden können und das Füllstandsignal sicher erkannt werden kann.

Die Füllmaschine kann entweder eine Vakuumfüllmaschine oder eine Hochvakuumfüllmaschine sein. Unter Vakuumfüllmaschinen versteht man z.B. Füllmaschinen mit oben offenem Trichter bzw. bei denen der Trichter nicht eigens evakuiert wird. Das Förderwerk wird evakuiert und damit die Füllmasse in das Förderwerk, z.B. Flügelzellenpumpe, eingezogen, wobei dem Füllmedium ebenfalls noch Luft entzogen wird.

Unter Hochvakuumfüller versteht man eine Füllmaschine mit oben geschlossenem Trichter, so dass der Trichter oberhalb der Füllmasse evakuiert werden kann. Das Förderwerk wird ebenfalls evakuiert. Damit die Kammern im Förderwerk ausreichend befüllt werden, muss im Förderwerk ein höherer Unterdruck als im darüber liegenden Trichter erzeugt werden. Die vorliegende Erfindung ermöglicht insbesondere auch eine zuverlässige Füllstandsermittlung bei Hochvakuumfüllern, obwohl der Trichterinnenraum evakuiert ist.

Wie bereits erläutert, kann gemäß einer bevorzugten Ausführungsform ein Ausblenden von Reflexionssignalen fester und/oder beweglicher Teile erfolgen.

Die Auswerteeinheit kann dabei erkennen, z.B. anhand der Signalhöhe oder der Laufzeit des Signals, dass es sich um eine Reflexion von elektromagnetischen Wellen beispielsweise an der Behälterwand und/oder Einbauteilen, wie z.B. Zubringerkurve und/oder Schnecke, handelt. Dazu kann beispielsweise die Behältergeometrie in die Auswerteeinheit eingegeben werden, wobei z.B. auch empirisch vorab Reflexionssignale von festen und/oderbeweglichen Teilen des Trichters bestimmt werden können, die dann ausgeblendet werden können. Es ist z.B. auch möglich, dass bestimmt wird, wann sich ein bewegliches Teil, insbesondere eine Zubringerkurve und/oder Schnecke beispielsweise in der Hauptstrahlkeule des Radarsensors befindet, wobei in einem entsprechenden Zeitraum die Messwerte ausgeblendet werden oder keine Messung stattfindet.

Der Radarsensor ist durch ein Abdichtelement vom Trichterinnenraum abgedichtet. Dies bringt den Vorteil mit sich, dass der Radarsensor selbst nicht von der pastösen Füllmasse verschmutzt wird. Außerdem werden durch ein entsprechendes Abdichtelement die strengen hygienischen Lebensmittelbedingungen erfüllt, da der Radarsensor nicht in Kontakt mit Lebensmitteln kommen kann. Das Abdichtelement ist dabei insbesondere für die elektromagnetische Strahlung zumindest abschnittsweise durchlässig. Es ist beispielsweise möglich, dass der Radarsensor am Boden des Deckels des Trichters angeordnet ist, und der Deckel als Abdichtelement ausgebildet ist. Wenn der Deckel aus einem Material gebildet ist, das nicht für die elektromagnetische Strahlung durchlässig ist, so ist eine Öffnung im Deckelboden angeordnet und der Radarsensor an dieser Öffnung vorgesehen. Vorteilhafterweise ist diese Öffnung dann durch ein Abdichtelement, insbesondere eine für die elektromagnetische Strahlung durchlässige Scheibe, abgedichtet.

Vorteilhafterweise schließt sich an den Radarsensor, insbesondere an die Öffnung im Deckelboden, ein Schutzrohr an. Dieses Schutzrohr kann aus einem Material gebildet sein, das undurchlässig ist für die elektromagnetische Strahlung. Das Schutzrohr hat die Funktion, das Abdichtelement und den Sensor vor Verschmutzung zu schützen. Darüber hinaus kann das Schutzrohr auch noch eine Richtfunktion aufweisen. Bei der Radarfüllstandsmessung ist ein möglichst kleiner Abstrahlwinkel, d.h. eine gute Fokussierung, anzustreben, um Störreflexion durch die Tankwände oder durch Einbauten möglichst gering zu halten. Eine charakteristische Größe für die Beschreibung der Richtwirkung ist der Abstrahlwinkel bzw. die Halbwertsbreite. Hierunter versteht man den Kegelwinkel, an dessen Rand die Leistungsdichte 3dB unter der maximalen Leistungsdichte ist (d.h. am Rand dieser Keule ist die Leistungsdichte halb so groß wie in der Mitte). Aufgrund beispielsweise der Öffnung im Deckelboden bzw. aufgrund des gegebenenfalls vorgesehenen Schutzrohrs ergibt sich eine gute Fokussierung der elektromagnetischen Wellen. Vorteilhafterweise ist dieses Rohr schräg abgeschnitten, wobei vorzugsweise die schräg gestellte Öffnungsfläche von der Zuführöffnung der Füllmasse abgewandt ist. Dies bringt den Vorteil, dass das Anlagern von Füllgut am Sensor weiter verhindert wird. Eine schräge Öffnung, deren Fläche beispielsweise unter einen Winkel < 90° zur Längsachse des Rohrs verläuft, vorzugsweise unter einem Winkel von 30 - 60 ° führt in der Auswertung zu einer Verbesserung, weil dann das Echo-Signal am Rohrende einen fließenden Übergang zeigt, während bei gerade abgeschnittenem Rohr ein Signalsprung erzeugt wird.

Es ist auch möglich, dass der Radarsensor mit einem Stab oder einem Seil verbunden ist, die in den Trichter und somit das Füllmedium ragen können, wodurch die Ausbreitung der Wellen erfolgen kann. Hier erfolgt also die Ausbreitung der Wellen nicht berührungslos durch die Tankatmosphäre, sondern entlang einer elektrischen Leitung. Der Stab oder das Seil erstrecken sich dabei z.B. zumindest abgedichtet von einer Öffnung im Deckelboden aus ins Innere des Trichters. Der Stab oder das Seil können sich auch noch abschnittsweise innerhalb des Deckels erstrecken. Die vorliegende Erfindung wird nachfolgend unter Bezugnahme folgender Figuren näher erläutert.
- Fig. 1: zeigt grob schematisch einen Längsschnitt durch einen Teil einer Füllmaschine gemäß einer ersten Ausführungsform der vorliegenden Erfindung.
- Fig. 2: zeigt die in Fig. 1 gezeigte Ausführungsform mit schräg gestelltem Radarsensor.
- Fig. 3: zeigt grob schematisch eine weitere Ausführungsform eines Teils einer Füllmaschine gemäß der vorliegenden Erfindung.
- Fig. 4: zeigt grob schematisch einen Längsschnitt durch einen Sensor, der an einem Deckelboden befestigt ist gemäß der vorliegenden Erfindung.
- Fig. 5: zeigt grob schematisch einen Trichter einer Füllmaschine gemäß der vorliegenden Erfindung sowie die Signalhöhe in Abhängigkeit des Sensorabstands.
- Fig. 6: zeigt grob schematisch einen Längsschnitt durch einen Trichter gemäß einem weiteren Ausführungsbeispiel der vorliegenden Erfindung sowie die Signalhöhe in Abhängigkeit des Abstands vom Radarsensor.
- Fig. 7: zeigt den Nutzbereich und den ausgeblendeten Bereich der in Fig. 1 gezeigten Füllmaschine gemäß der vorliegenden Erfindung
- Fig. 8: zeigt grob schematisch eine Füllmaschine mit offenem Trichter gemäß einem weiteren Ausführungsbeispiel gemäß der vorliegenden Erfindung.

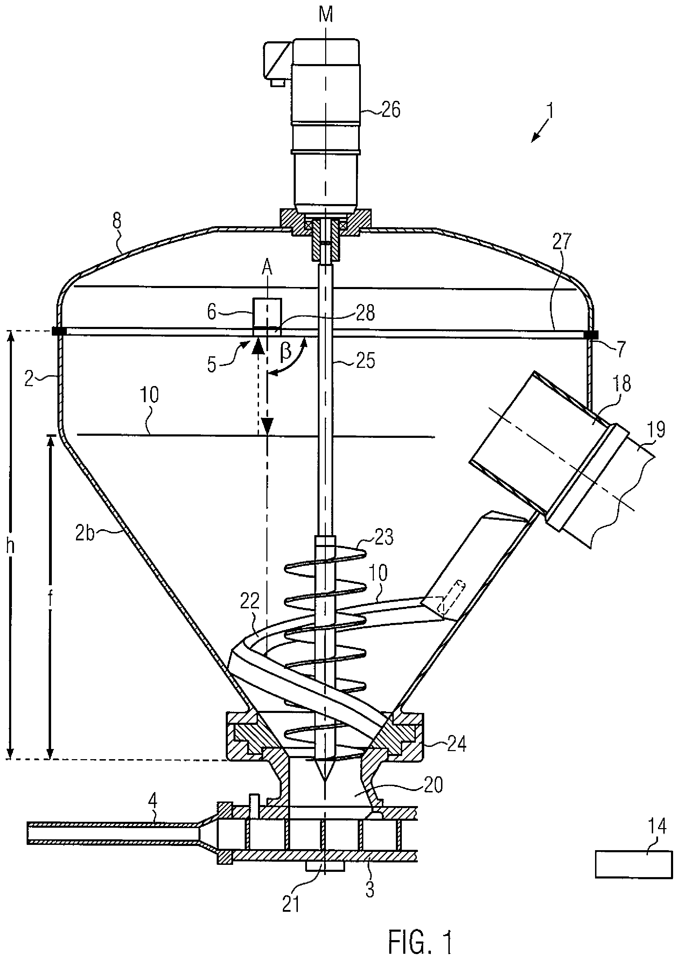

Fig. 1 zeigt eine Ausführungsform eines Teils einer Füllmaschine gemäß der vorliegenden Erfindung, wobei hier einfachheitshalber kein Maschinengehäuse gezeigt ist, sondern nur die wesentlichen Komponenten. Die erfindungsgemäße Füllmaschine 1 weist einen Trichter 2 auf. Die vorliegende Füllmaschine ist beispielsweise als Vakuumfüllmaschine oder Hochvakuumfüllmaschine ausgebildet. Die Füllmaschine weist hier einen Deckel 8 auf sowie einen zumindest teilweise konisch zulaufenden Teil 2b. Der Deckel 8 und der Trichter 2 sind über eine Dichtung vakuumdicht miteinander verbunden. In dem Trichter 2 kann hier beispielsweise ein Unterdruck erzeugt werden. Der Trichter 2 umfasst einen Einlass 18 zum Zuführen eines Füllmediums, z.B. einer pastösen Masse, wie z.B. Wurstbrät, aus einem nicht dargestellten Vorratsbehälter über das Zuführrohr 19. Der Trichter 2 umfasst weiter am unteren Ende, d.h. an dem dem Deckel 8 gegenüberliegenden Ende, einen Auslassbereich 20 für das Füllmedium. An dem Auslassbereich 20 ist ein Förderwerk 3 für das Füllmedium angeordnet, das das Füllmedium aus dem Trichter 2 in ein Füllorgan, hier ein Füllrohr 4, fördert. Eine nur schematisch dargestellte Vakuumpumpe 21 dient dazu, im Förderwerk bzw. in den Förderwerkskammern und gegebenenfalls über einen separaten Vakuumanschluss im Trichter 2 einen Unterdruck zu erzeugen. Über das Füllrohr 4 wird dann in bekannter Weise das Füllmedium, wie beispielsweise das Wurstbrät, in dafür vorgesehene Wursthüllen ausgestoßen.

Um das Füllmedium aus dem Trichter 2 in das Förderwerk 3 zu fördern, ist eine entsprechende Zuführeinrichtung 22, 23 vorgesehen. Hier umfasst die Zuführeinrichtung beispielsweise eine Kombination aus einer Zubringerkurve 22 und einer innerhalb der Zubringerkurve angeordnete Förderschnecke 23. Hier ist die schneckenförmige Zubringerkurve 22 als innen offene Schnecke mit Wandschaber ausgebildet. Sie läuft um eine Zubringerkurvenachse, die vorzugsweise der Mittelachse M des Vakuumtrichters 2 entspricht. Die Zubringerkurve ist im Lager 24 drehbar gelagert und wird dort über einen entsprechenden Antrieb, der hier beispielsweise nicht sichtbar hinter dem Lager 24 angeordnet ist, angetrieben. Die Schnecke 23 wird über die Welle 25 über einen entsprechenden Motor 26 angetrieben. Bei diesem Ausführungsbeispiel befindet sich der Motor 26 außerhalb des Deckels 8.

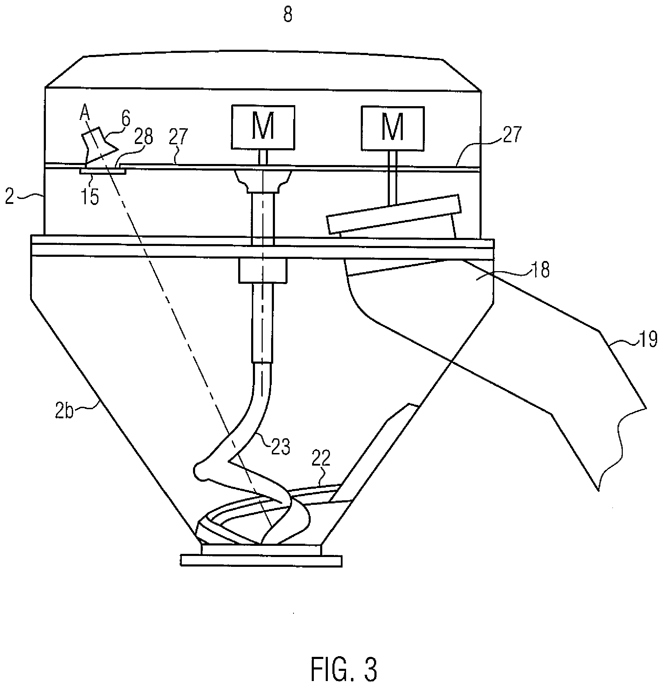

Wie in Fig. 3 dargestellt ist, ist es jedoch auch möglich, dass sich der Antriebmotor 26 für die Schnecke innerhalb des Deckels 8, der über einen Deckelboden 27, vorzugsweise druckdicht vom Innenraum des Trichters 2 abgetrennt ist. Im Inneren des Deckels 8 oberhalb des Deckelbodens 27 kann auch, wie aus Fig. 3 hervorgeht, noch ein Antrieb für ein Ventil vorgesehen sein, das den Einlass 18 verschließen kann. Prinzipbedingt ist also der Innenraum des Deckels 8 unhygienisch ausgebildet, so dass aus diesem Grund eine Abdichtung zum Innenraum des Trichters 2, in dem sich Lebensmittel befindet, notwendig ist. Darüber hinaus ist eine entsprechende Abdichtung auch deshalb wichtig, da in dem Trichterinnenraum 2 gegebenenfalls ein Vakuum erzeugt wird.

Für die kontinuierliche oder intermittierende Versorgung der Füllmaschine 1 mit Füllmedium ist eine Füllstandserfassung notwendig.

Zu diesem Zweck weist die Füllmaschine eine Einrichtung zur Füllstandsmessung 5 auf. Die Einrichtung zur Füllstandsmessung 5 umfasst einen Radarsensor 6 sowie eine Auswerteeinheit 14. Der Radarsensor 6 umfasst ein nicht extra dargestelltes Antennensystem, über das elektromagnetische Wellen, insbesondere kurze Mikrowellenpulse, auf das Füllmedium abgestrahlt werden können, von der Oberfläche 10 reflektiert werden können und vom Antennensystem wieder empfangen werden können. Die Zeit vom Senden bis zum Empfangen der Signale ist proportional zum Abstand zwischen Sensor und Oberfläche 10 bzw. bei bekannter Geometrie des Trichters 2 zur Füllhöhe.

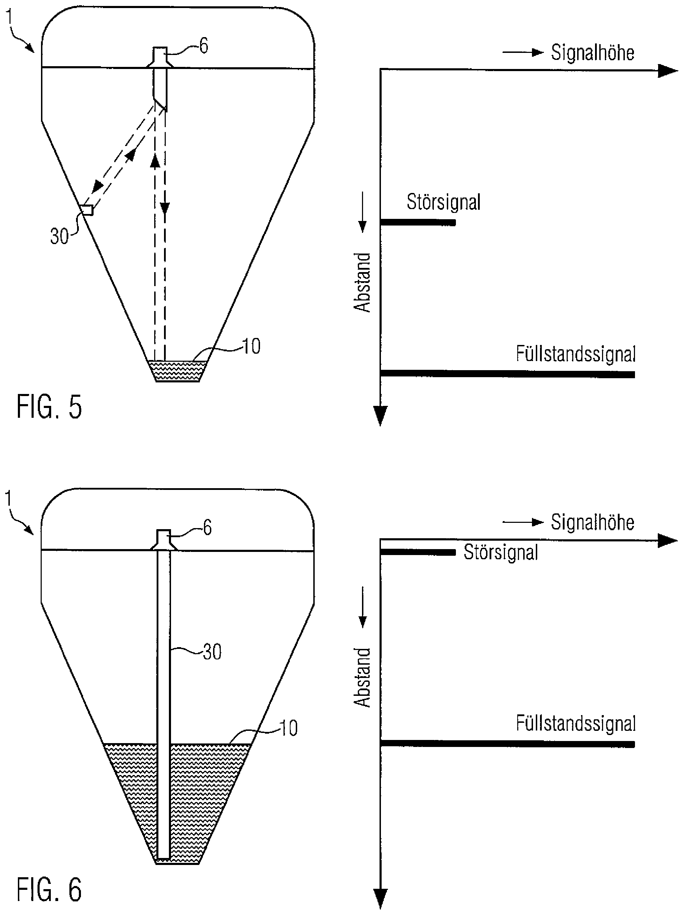

Neben der Pulsradarmethode, bei der, wie beschrieben, aufgrund der Laufzeit der Pulse vom Sender über das reflektierende Objekt bis zum Empfänger der Zielabstand ermittelt wird, ist es auch möglich, ein Interferrometerradarverfahren zu verwenden, wobei mit Hilfe eines unmodulierten Hochfrequenzsignals konstanter Frequenz Abstandsänderungen gemessen werden können, wobei die Phase des empfangenen Signals in Relation zur Sendephase ermittelt wird. Grundsätzlich kann auch die FMCW-Radarmethode (Frequency-Modulated Continuous Wave) angewandt werden. Hier liegt das Signal kontinuierlich an, wobei die Frequenz moduliert wird, meist in sukzessiven (linearen) Rampen. Aus dem Empfangssignal kann man den Abstand des Zielobjekts ermitteln. Auch das TDR-Verfahren (Time Domain Reflectometry) kann Anwendung finden und wird auch noch nachfolgend im Zusammenhang mit Fig. 6 näher erläutert.

Wie aus der Fig. 1 hervorgeht, ist ein Radarsensor 6 oberhalb einer Oberkante 7 des Trichters 2 angeordnet. Hier ist der Sensor 6 derart angeordnet, dass seine Längsachse A, d.h. hier die Antennenachse A, (Abstrahlrichtung) senkrecht zu einer Horizontalebene verläuft, wobei die Horizontalebene die Oberfläche des Füllmediums 10 umfasst oder parallel dazu verläuft, hier auf jeden Fall senkrecht zur Mittelachse M der Füllmaschine verläuft. Der Winkel β ist bei diesem Ausführungsbeispiel 90°. Der Radarsensor 6 ist exzentrisch angeordnet, da in der Mitte des Trichters bzw. der Füllmaschine Einbauten angeordnet sind, hier beispielsweise die Welle 25. Der Radarsensor 6 ist hier in Horizontalrichtung betrachtet zwischen der Zubringerkurve 22 und der Schnecke 23 angeordnet.

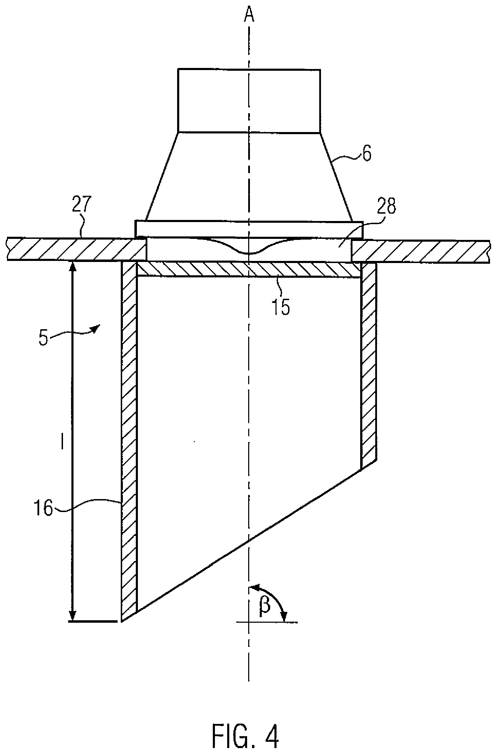

Wenn der Deckelboden 27 aus Metall, z.B. Edelstahl, ausgebildet ist, ist eine Öffnung 28 im Deckelboden 27 gebildet, wie insbesondere aus Fig. 4 hervorgeht, damit die elektromagnetischen Wellen den Deckel 27 passieren können. Der Sensor 6 ist dann im Bereich dieser Öffnung 28 angeordnet. Alternativ könnte auch der gesamte Deckelboden 27 aus einem für die elektromagnetischen Wellen durchlässigen Material, wie beispielsweise Kunststoff ausgebildet sein. Dann wäre keine separate Öffnung notwendig. Vorteilhafterweise ist der Radarsensor 6 durch ein Abdichtelement 15 vom Trichterinnenraum abgedichtet, d.h. vorzugsweise vakuumdicht abgedichtet. Dazu kann beispielsweise eine Abdichtplatte, z.B. Kunststoffplatte, insbesondere Plexischeibe, vorgesehen sein. Das Abdichtelement 15 sollte aus einem Material ausgebildet sein, das durchlässig für die elektromagnetische Strahlung ist. Somit ist hier sichergestellt, dass es keine Verbindung zwischen dem unhygienischen Inneren des Trichterdeckels 8 und dem Trichterinnenraum, in dem sich das Lebensmittel befindet, gibt. Aber auch wenn der Sensor nicht in dem abgedichteten Deckel angeordnet ist, sondern zumindest teilweise in den Trichterinnenraum ragt, ist es vorteilhaft ihn durch ein Abdichtelement, z.B. eine Schutzkappe die ihn umgibt und mit der Trichter- oder Deckelwandung abschließt (nicht dargestellt) von dem Trichterinnenraum abzuschirmen und somit vor Verschmutzung zu schützen. An den Radarsensor 6, insbesondere an oder um die Öffnung 28 oder das Abdichtelement 15, kann sich ein Schutzrohr 16 anschließen, das beispielsweise eine Länge l in einem Bereich von 3 cm bis 30 cm und einen Durchmesser in einem Bereich von 5cm bis 20 cm aufweisen kann. Wenn ein entsprechendes Schutzrohr 16 vorgesehen ist, könnte das Abdichtelement 15 auch am Rohrende angebracht werden und dieses dicht verschließen. Es ist vorteilhaft, wenn das Schutzrohr an dem dem Deckel abgewandten Ende schräg abgeschnitten ist, weil damit ein signifikantes Signalecho am Rohrende weitgehend vermieden wird und somit Fehlmessungen reduziert werden.

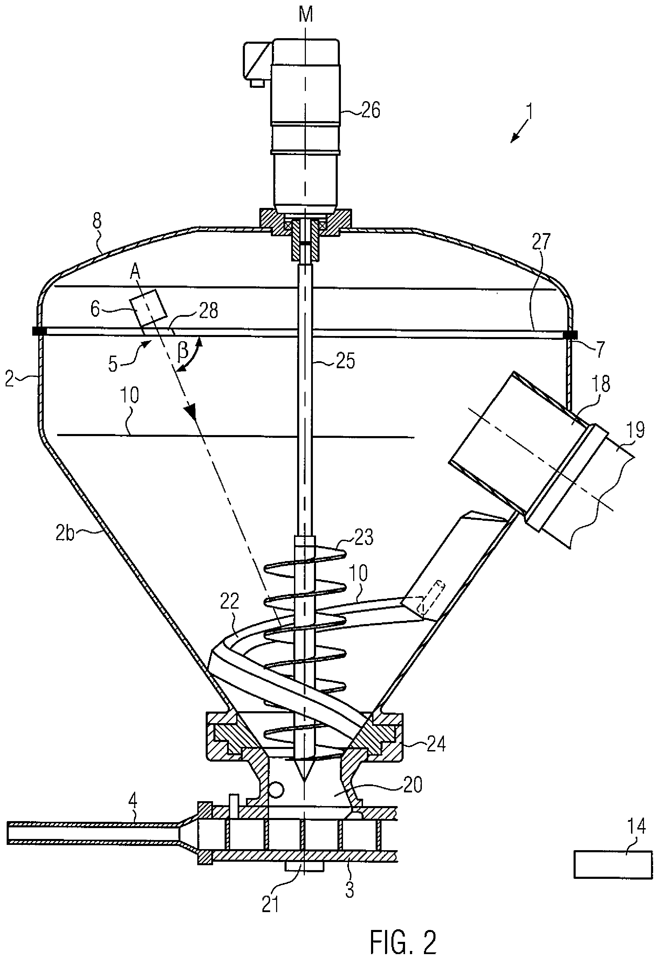

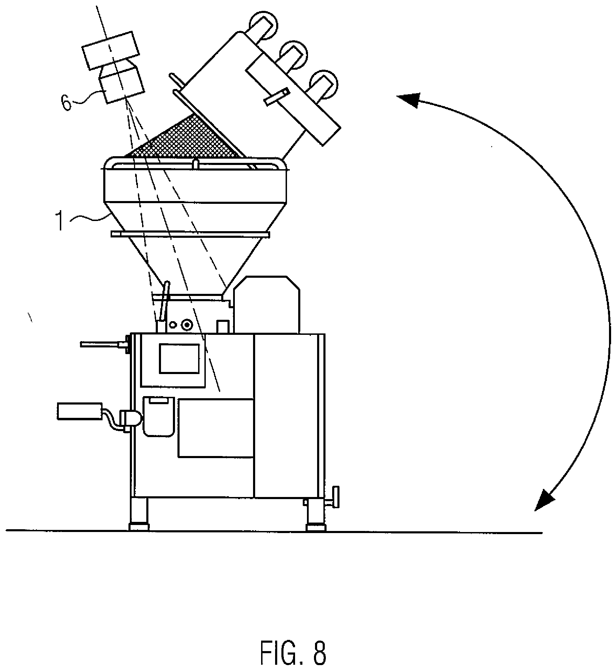

Wie insbesondere auch aus den Fig. 2 und 3 hervorgeht, muss der Winkel β nicht zwangsläufig 90° sein, sondern der Sensor kann auch schräg eingebaut werden, d.h. dass seine Längsachse A bzw. die Antennenachse A d.h. die Hauptabstrahlrichtung unter einem Winkel von < 90°, vorzugsweise <90° bis 30° bzw. 80° bis 40° liegt. Eine Schrägstellung des Radarsensors und somit der Antennenachse ermöglicht, das die elektromagnetischen Wellen, auch bei exzentrischer Anordnung des Radarsensors und konisch zulaufendem Trichter mit hoher Leistungsdichte bis in den unteren Bereich des Trichters reichen und ungewünschte Reflexionen minimiert werden können. Der Radarsensor ist dazu zur Mittelachse M hin schräg angestellt. Eine solche Schrägstellung des Sensors ist insbesondere bei offenen Trichtern (d.h. bei Trichtern mit offener Trichteroberseite) vorteilhaft wie in Fig. 8 gezeigt ist, da der Sensor 6 hier relativ weit außen in Bezug auf die Mittelachse des Trichters 1angeordnet werden muss um eine Kollision mit dem Brätwagen zu verhindern , da der Brätwagen beim Auskippen des Füllmediums bis in den mittleren Bereich des Trichters ragt. Der Sensor 6 ist hier z.B. außen an dem Trichter 1 oder dem Maschinengestell bzw. Maschinenständer über eine Befestigungseinrichtung (nicht dargestellt) befestigt. Wie insbesondere aus Fig. 1, 2 und 3 hervorgeht, wird die elektromagnetische Strahlung an der Oberfläche 10 des Füllmediums reflektiert, um den Abstand zum Sensor bzw. die Füllhöhe ermitteln zu können. Jedoch wird die elektromagnetische Strahlung ebenfalls an den Behälterwandungen und festen oder sich bewegenden Einbauten, wie die Zubringerkurve 22 und Schnecke 23 reflektiert. Die Auswerteeinheit 14 kann die Reflexionssignale von der Trichterwand und/oder von Bauteilen im Trichter, insbesondere den beweglichen Teilen, ausblenden, und genau das Füllstandsignal identifizieren.

Dies wird beispielhaft im Zusammenhang mit Fig. 5 erläutert. Fig. 5 zeigt grob schematisch einen Trichter 2, bei dem die elektromagnetischen Wellen vom Sensor 6 auf die Oberfläche 10 des Füllmediums auftreffen und reflektiert werden. Wie dem rechten Diagramm zu entnehmen ist, ergibt sich dabei für diesen bestimmten Abstand ein Füllstandsignal. Mit 30 ist beispielhaft eine Einrichtung 30 gezeigt, auf die ebenfalls elektromagnetische Wellen auftreffen, da die ausgesandten elektromagnetischen Wellen einen bestimmten Abstrahlwinkel aufweisen können. Die Einrichtung 30 reflektiert, wie aus Fig. 5 ersichtlich ist, die Wellen, die zu einem Störsignal, jedoch mit geringerer Intensität führen. Da die Störquellen bekannt sind, können Störsignale, die einen bestimmten bekannten Abstand aufweisen, oder deren Signalhöhe nicht der vom Füllstandsignal erwarteten Signalhöhe entsprechen, ausgefiltert bzw. ausgeblendet werden. Es ist jedoch auch möglich, dass z.B. von einer Maschinensteuerung der Füllmaschine bestimmt wird, wann sich ein bewegliches Teil, z.B. eine Zubringerkurve oder -Schnecke in der Hauptstrahlkeule des Radarsensors befindet, wobei dann in einem entsprechenden Zeitraum die Messwerte ausgeblendet werden oder keine Messung stattfindet.

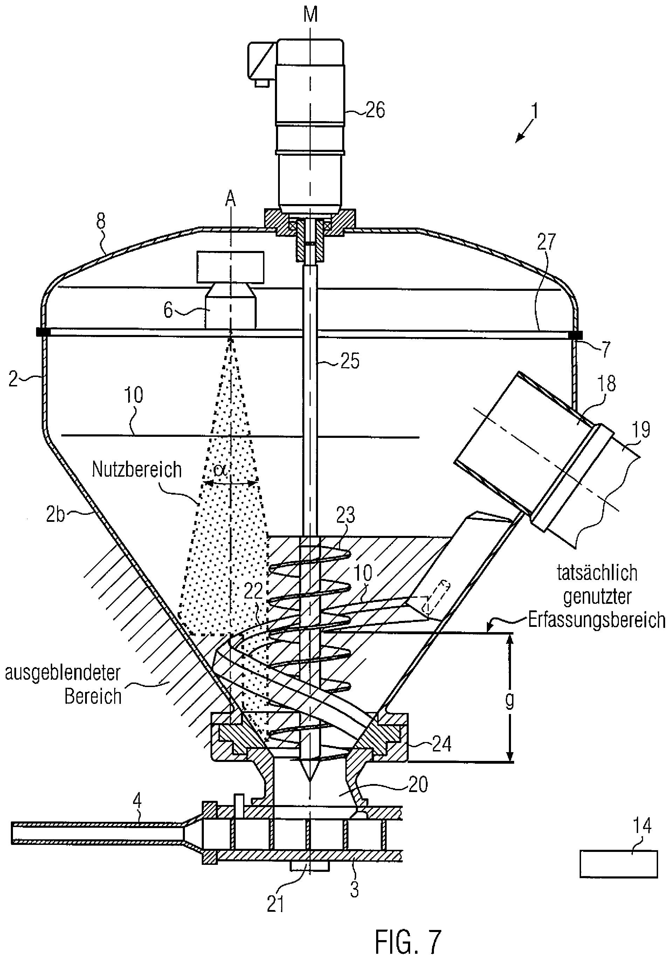

Bei bestehenden Einbauten ist es also vorteilhaft bei Inbetriebnahme eine Störsignalspeicherung vorzunehmen. Wie aus Fig. 7 hervorgeht strahlt der Sensor die elektromagnetischen Wellen unter einem Abstrahlwinkel α ab, so dass sich innerhalb der Strahlungskeule der mögliche Nutzbereich ergibt. Der ausgeblendete Bereich, in dem reflektierte Signale als Störsignalen ausgeblendet werden, ist gestrichelt dargestellt. Es ergibt sich daher der gepunktete tatsächliche Messbereich in dem Messignale störungsfrei erfassbar sind. Es ist möglich den Füllstand bis in den untersten Bereich zu erfassen, jedoch wird bei einem bevorzugten Ausführungsbeispiel der Füllstand nur bis zu einer Höhe g erfasst, wobei z.B. g > 0,2 h (Höhe des Trichters ohne Deckel).Eine Messung im untersten Bereich ist deshalb bei manchen Anwendungen unnötig, da hier die Füllmenge in Relation zu den Volumen der Einbauten gering ist.

Fig. 6 zeigt eine weitere Ausführungsform der vorliegenden Erfindung. Dieses Ausführungsbeispiel entspricht im Wesentlichen den vorherigen Ausführungsbeispielen, wobei hier die Ausbreitung der Wellen nicht berührungslos erfolgt, sondern entlang eines Stabs oder eines Seils 30. Zunächst werden die elektromagnetischen Wellen von dem Radarsensor in den Stab oder das Seil 30 eingekoppelt, wodurch, wie aus Fig. 6 hervorgeht, zunächst ein Störsignal erzeugt wird. Wie zuvor beschrieben, erfolgt eine Reflexion an der Oberfläche 10 des Füllmediums derart, dass ein Füllstandsignal entsprechend erzeugt wird. Der Stab bzw. das Seil erstrecken sich vorteilhafterweise bis zum unteren Ende des Trichters, d.h. bis zu dem Auslassbereich 20. Dieses System bringt eine gute Fokussierung, d.h. einen kleinen Abstrahlwinkel, mit sich, um Störreflexionen durch die Tankwände oder Einbauten möglichst zu vermeiden.

Bei dem erfindungsgemäßen Verfahren können vorab in die Auswerteeinheit 14 über eine nicht dargestellte Eingabeeinheit Werte zur Trichtergeometrie, wie beispielsweise die Höhe h, d.h. der Abstand des unteren Endes des Trichters 2 vom Sensor 6, eingegeben werden, um den Füllstand f zu berechnen (siehe Fig. 1).

Es ist auch möglich, gemäß einer bevorzugten Ausführungsform, bereits im Vorfeld den Abstand bestimmter Störgrößen (siehe Fig. 5) einzugeben, damit diese bereits vorab bei der Berechnung des Füllstands berücksichtigt werden können. Alternativ können entsprechende Störsignale während der Messung bestimmt und ausgeblendet werden. Gemäß einem bevorzugten Ausführungsbeispiel sendet das Antennensystem des Radarsensors 6 kurze Mikrowellenpulse, beispielsweise mit einer Leistung von < 10 mW, einer Pulsdauer von < 2 ns und einer Messfrequenz im K-Band (26 GHz-Technologie) auf die Oberfläche 10 des Füllmediums. Die Auswerteeinheit 14 ermittelt die Laufzeit vom Senden bis zum Empfangen des Füllstandsignals. Die Laufzeit ist proportional zum Abstand zwischen Sensor und Oberfläche 10, woraus der Füllstand f berechnet wird. Die Messung kann kontinuierlich erfolgen, so dass der Verlauf des Füllstands angezeigt werden kann, wobei die Auswerteeinheit 14 mit einer Maschinensteuerung der Füllmaschine verbunden sein kann oder Teil der Maschinensteuerung ist und wobei die Füllstandsignale herangezogen werden können, um die Zufuhr des Füllmediums über den Einlass 18 zu steuern oder zu regeln, insbesondere durch das in Fig. 3 gezeigte Ventil am Ende des Einlasses 18. Das erfindungsgemäße Verfahren funktioniert auch besonders gut, wenn im Trichter 2 ein Unterdruck in einem Bereich von -1 bar bis ≤ 0 bar erzeugt wird. Das erfindungsgemäße Verfahren kann jedoch auch in einem Bereich von -1 bar bis 3 bar, insbesondere -1 bar bis 2 bar angewendet werden.

## Patentansprüche

1. Füllmaschine (1) zum Abfüllen von Füllmedium, insbesondere zum Herstellen von Würsten, mit einem Trichter (2) mit einem Deckel (8) zur Aufnahme von Füllmedium, einem Förderwerk (3) zum Fördern des Füllmediums zu einem Füllorgan (4), insbesondere einem Füllrohr, sowie einer Einrichtung (5) zur Messung des Füllstands im Trichter (2), **dadurch gekennzeichnet, dass** die Einrichtung zur Füllstandsmessung (5) einen Radarsensor (6) umfasst, der durch ein Abdichtelement (15) vom Trichterinnenraum abgedichtet ist und der Radarsensor (6) in einem Bereich innerhalb des Deckels (8), vorzugsweise an einer Öffnung in einem Deckelboden angeordnet ist.

2. Füllmaschine nach Anspruch 1, **dadurch gekennzeichnet, dass** sich der Trichter (2) zumindest abschnittsweise konisch nach unten verjüngt und eine Oberkante (7) umfasst, wobei der Radarsensor in einem Bereich oberhalb der Oberkante (7) angeordnet ist.

3. Füllmaschine nach mindestens einem der vorhergehenden Ansprüche, **dadurch gekennzeichnet, dass** der Radarsensor (6) derart angeordnet ist, dass seine Längsachse A senkrecht zu einer Horizontalebene ausgerichtete ist oder aber schräg insbesondere um einen Winkel von < 90°- 30°, vorzugsweise um < 90° bis 40° ° liegt zu einer Horizontalebene geneigt ist.

4. Füllmaschine nach mindestens einem der vorhergehenden Ansprüche, **dadurch gekennzeichnet, dass** der Radarsensor (6) exzentrisch angeordnet ist.

5. Füllmaschine nach mindestens einem der vorhergehenden Ansprüche, **dadurch gekennzeichnet, dass** die vom Radarsensor (6) ausgesandten elektromagnetischen Wellen im unteren Bereich des Fülltrichters (2), auf die Trichterwandung (11) und/oder den Trichterboden (12) und/oder eine Trichterbodenöffnung (13) auftreffen.

6. Füllmaschine nach mindestens einem der Ansprüche 1 bis 5, **dadurch gekennzeichnet, dass** der Radarsensor (6) mit einer Auswerteeinheit (14) verbunden ist, die derart ausgebildet ist, dass über die Laufzeit der von dem Radarsensor (6) gesendeten und von der Oberfläche des Füllmediums zum Radarsensor reflektierten elektromagnetischen Wellen der Füllstand im Trichter (2) ermittelt werden kann.

7. Füllmaschine nach mindestens Anspruch 6, **dadurch gekennzeichnet, dass** die Auswerteeinheit Reflexionssignale von der Trichterwand und/oder von Bauteilen im Trichter (2), insbesondere beweglichen Teilen ausblenden kann.

8. Füllmaschine nach mindestens einem der Anspruche 1 bis 7, **dadurch gekennzeichnet, dass** die Füllmaschine (1) eine Vakuumfüllmaschine oder eine Hochvakuumfüllmaschine ist.

9. Verfahren zum Bestimmen des Füllstands in einem Trichter (2) einer Füllmaschine (1), insbesondere einer Füllmaschine nach mindestens einem der Ansprüche 1 bis 8, **dadurch gekennzeichnet, dass** die Füllstandsmessung mittels Radarsensor (6) erfolgt, wobei der Radarsensor (6) durch ein Abdichtelement (15) vom Trichterinnenraum abgedichtet ist und wobei der Radarsensor (6) in einem Bereich innerhalb eines Deckels (8) des Trichters (2), vorzugsweise an einer Öffnung in einem Deckelboden angeordnet ist.

10. Verfahren nach Anspruch 9, **dadurch gekennzeichnet, dass** über die Laufzeit der von dem Radarsensor (6) gesendeten und von der Oberfläche des Füllmediums zum Radarsensor (6) reflektierten elektromagnetischen Wellen der Füllstand im Trichter ermittelt wird.

11. Verfahren nach Anspruch 9 oder 10, **dadurch gekennzeichnet, dass** die Reflexionssignale von festen und/oder beweglichen Teilen an denen die elektromagnetischen Wellen reflektiert wurden ausgeblendet werden.

12. Füllmaschine nach Anspruch 1, **dadurch gekennzeichnet, dass**
der Radarsensor vorzugsweise an einer Öffnung in dem Deckelboden angeordnet ist, wobei die Öffnung durch das Abdichtelement (15), in Form einer für die elektromagnetische Strahlung durchlässigen Scheibe, abgedichtet ist.

13. Füllmaschine nach mindestens einem der Ansprüche 1-8 oder 12, **dadurch gekennzeichnet, dass** sich an den Radarsensor (6), insbesondere an die Öffnung im Deckelboden, ein Schutzrohr (16) anschließt wobei vorzugsweise dessen, dem Deckel abgewandtes Ende schräg abgeschnitten ist.

14. Füllmaschine nach mindestens einem der Ansprüche 1-8 oder 12-13, **dadurch gekennzeichnet, dass** der Radarsensor (6) mit einem Stab oder einem Seil verbunden ist, die in den Trichter und somit das Füllmedium ragen können, und über die die Ausbreitung der Wellen erfolgt.

## Claims

1. Filling machine (1) for filling of filling medium, in particular for the production of sausages having a hopper (2) with a cover (8) for accommodating filling medium, a conveyer (3) for supplying the filling medium to a filling element (4), in particular a filling tube, as well as a device (5) for measuring the filling level in the hopper (2), **characterized in that** the device for the filling level measurement (5) comprises a radar sensor (6) which is sealed by a sealing element (15) from the hopper interior and the radar sensor (6) is arranged in an area inside the cover (8), preferably at an opening in the cover bottom.

2. Filling machine according to claim 1, **characterized in that** the hopper (2) is at least in sections conically tapered downwards and comprises an upper edge (7), whereby the radar sensor is arranged in an area above the upper edge (7).

3. Filling machine according to at least one of the foregoing claims, **characterized in that** the radar sensor (6) is arranged such that its longitudinal axis A is oriented perpendicularly to a horizontal plane or, however, lies inclined, in particular about an angle of < 90° - 30°, preferably about < 90° to 40° to a horizontal plane.

4. Filling machine according to at least one of the foregoing claims, **characterized in that** the radar sensor (6) is eccentrically arranged.

5. Filling machine according to at least one of the foregoing claims, **characterized in that** the electromagnetic waves sent from the radar sensor in the lower area of the filling hopper (2) hit the hopper wall (11) and/or the hopper bottom (12) and/or a hopper bottom opening (13).

6. Filling machine according toat least one of the claims 1 to 5, **characterized in that** the radar sensor (6) is connected to an analysis unit (14), which is configured such that during the time of the electromagnetic waves sent and reflected from the surface of the filling medium to the radar sensor, the filling level in the hopper (2) can be determined.

7. Filling machine according to at least claim 6, **characterized in that** the analysis unit can fade out reflection signals from the hopper wall and/or form components in the hopper (2), in particular from movable parts.

8. Filling machine according to at least one of the claims 1 to 7, **characterized in that** the filling machine (1) is a vacuum filling machine or a high vacuum filling machine.

9. Method for determining the filling level in a hopper (2) of a filling machine (1), in particular of a filling machine according to one of the claims 1 to 8, **characterized in that** the filling level measurement occurs via a radar sensor (6) wherein the radar sensor (6) is sealed by a sealing element (15) from the hopper interior and the radar sensor (6) is arranged in an area inside the cover (8), preferably at an opening in the cover bottom.

10. Method according to claim 9, **characterized in that** during the time of electromagnetic waves sent by the radar sensor (6) and reflected by the surface of the filling medium to the radar sensor (6), the filling level in the hopper is determined.

11. Method according to claims 9 or 10, **characterized in that** the reflection signals of fixed and/or movable parts at which electromagnetic waves were reflected, are faded out.

12. Filling machine according to claim 1, **characterized in that**
the radar sensor is preferably arranged at an opening in the cover bottom, whereby the opening is sealed by the sealing element (15) by a plate permeable for the electromagnetic radiation.

13. Filling machine according to one of the claims 1-8 or 12, **characterized in that** a protective tube (6) connects the radar sensor (6), in particular at the opening in the cover bottom, whereby preferably the end of the tube at the leeward side of the cover is beveled.

14. Filling machine according to at least one of the claims 1-8 or 12-13, **characterized in that** the radar sensor (6) is connected to a rod or a rope, which may protrude into the hopper and, thus, the filling medium and via which the spread of the waves occurs.

## Revendications

1. Machine de remplissage (1) destinée à assurer le conditionnement par remplissage d'une masse de remplissage, notamment pour la fabrication de saucisses, comprenant une trémie (2) avec un couvercle (8) pour recevoir une masse de remplissage, un groupe de transport (3) pour transporter la masse de remplissage vers un organe de remplissage (4), notamment un tube de remplissage, ainsi qu'un dispositif (5) pour la mesure du niveau de remplissage dans la trémie (2),
**caractérisée en ce que** le dispositif de mesure du niveau de remplissage (5) comprend un capteur radar (6), qui est rendu étanche par rapport à l'espace intérieur de trémie à l'aide d'un élément d'étanchéité (15), et le capteur radar (6) est agencé dans une zone à l'intérieur du couvercle (8), de préférence au niveau d'une ouverture dans un fond de couvercle.

2. Machine de remplissage selon la revendication 1, **caractérisée en ce que** la trémie (2) se rétrécit, au moins par secteurs, de manière conique vers le bas, et présente un bord supérieur (7), le capteur radar étant agencé dans une zone au-dessus du bord supérieur (7).

3. Machine de remplissage selon l'une au moins des revendications précédentes, **caractérisée en ce que** le capteur radar (6) est agencé de manière telle, que son axe longitudinal A soit orienté perpendiculairement à un plan horizontal, ou bien soit incliné par rapport à un plan horizontal, notamment d'un angle < 90° - 30°, de préférence < 90° à 40°.

4. Machine de remplissage selon l'une au moins des revendications précédentes, **caractérisée en ce que** le capteur radar (6) est agencé de manière excentrique.

5. Machine de remplissage selon l'une au moins des revendications précédentes, **caractérisée en ce que** les ondes électromagnétiques émises par le capteur radar (6), viennent tomber, dans la partie inférieure de la trémie de remplissage (2), sur la paroi de trémie (11) et/ou le fond de trémie (12) et/ou une ouverture de fond de trémie (13).

6. Machine de remplissage selon l'une au moins des revendications 1 à 5, **caractérisée en ce que** le capteur radar (6) est relié à une unité de traitement de données (14), qui est configurée pour pouvoir déterminer le niveau de remplissage dans la trémie (2), par l'intermédiaire de la durée de parcours des ondes électromagnétiques émises par le capteur radar (6) et réfléchies par la surface de la masse de remplissage vers le capteur radar.

7. Machine de remplissage selon au moins la revendication 6, **caractérisée en ce que** l'unité de traitement de données est en mesure de masquer des signaux de réflexion de la paroi de trémie et/ou de pièces dans la trémie (2), notamment des pièces mobiles.

8. Machine de remplissage selon l'une au moins des revendications 1 à 7, **caractérisée en ce que** la machine de remplissage (1) est une machine de remplissage sous vide ou une machine de remplissage sous vide poussé.

9. Procédé pour déterminer le niveau de remplissage dans une trémie (2) d'une machine de remplissage (1), notamment une machine de remplissage selon l'une au moins des revendications 1 à 8, **caractérisé en ce que** la mesure du niveau de remplissage s'effectue au moyen d'un capteur radar (6), le capteur radar (6) étant rendu étanche par rapport à l'espace intérieur de la trémie à l'aide d'un élément d'étanchéité (15), et le capteur radar (6) étant agencé dans une zone à l'intérieur d'un couvercle (8) de la trémie (2), de préférence au niveau d'une ouverture dans un fond de couvercle.

10. Procédé selon la revendication 9, **caractérisé en ce que** l'on détermine, par l'intermédiaire de la durée de parcours des ondes électromagnétiques émises par le capteur radar (6) et réfléchies par la surface de la masse de remplissage vers le capteur radar (6), le niveau de remplissage dans la trémie.

11. Procédé selon la revendication 9 ou la revendication 10, **caractérisé en ce que** l'on masque les signaux de réflexion de pièces fixes et/ou mobiles sur lesquelles ont été réfléchies les ondes électromagnétiques.

12. Machine de remplissage selon la revendication 1, **caractérisée en ce que** le capteur radar est de préférence agencé au niveau d'une ouverture dans le fond de couvercle, l'ouverture étant rendue étanche par l'élément d'étanchéité (15) se présentant sous la forme d'un disque perméable au rayonnement électromagnétique.

13. Machine de remplissage selon l'une au moins des revendications 1-8 ou la revendication 12, **caractérisée en ce qu'**au capteur radar (6), notamment à l'ouverture dans le fond de couvercle, se raccorde un tube de protection (16), dont l'extrémité éloignée du couvercle est de préférence coupée en biseau.

14. Machine de remplissage selon l'une au moins des revendications 1-8 ou 12-13, **caractérisée en ce que** le capteur radar (6) est relié à une tige ou un câble, qui peuvent s'engager dans la trémie et ainsi dans la masse de remplissage, et par l'intermédiaire desquels s'effectue la propagation des ondes.
